# EUROPEAN PATENT APPLICATION

(11) **EP 3 907 880 A1**
(43) Date of publication of application: **10.11.2021**
(21) Application number: 20382373.7
(22) Date of filing: 06.05.2020
(51) Int. Cl.: H02S 20/10, H02S 40/32

(54) **SUPPORTING STRUCTURE FOR FOTOVOTAIC PANELS AND PHOTOVOLTAIC INSTALATION COMPRISING THE SUPPORTING STRUCTURE**

(71) Applicant: Soltec Innovations, S.L., 30500 Molina de Segura (ES)
(72) Inventor: Torrano Carrillo, Francisco Javier, 30820 Alcantarilla (ES); Carpio Obre, Francisco Javier, 46870 Ontinyent (ES); Teruel Hernández, José Alfonso, 30007 Zarandona (ES)
(74) Representative: Isern Patentes y Marcas S.L.

(57) **Abstract**

The supporting structure comprises an omega-profile shaped metal support (3) with: horizontal upper portion (4), for vertically supporting photovoltaic panels (2); two flat lower portions (5) extending on both sides of upper portion (4), and connecting portions (6), connecting upper portion (4) with lower portions (5). Lower portions (5) include attaching holes (7) for attaching the lower portions (5) to ground through attaching means (8). Upper portion (4) and connecting portions (6) define inner hole (10) locating a gathering cabling (11) for gathering the electricity collected by each panel (2). The installation comprises photovoltaic panels (2) mounted on supporting structures. Preferably, albedo optimizing elements (21), attached to the metal support (3) are also included for improving capturing of albedo radiation. The invention helps to reduce foundation material, make mechanical and electrical contacts easier and raising gathering efficiency.

## Description

### Technical field of the invention

The present invention belongs to the technical field of solar energy, in particular to photovoltaic solar energy. More particularly, the object of the invention relates, according to a first aspect, to a supporting structure for supporting photovoltaic panels in a vertical / upright position. According to a second aspect, the invention relates to a photovoltaic installation comprising the above-referred supporting structure.

### Background of the invention (state of the art)

Some types of photovoltaic panels, such as bifacial photovoltaic panels, provided with capturing solar cells on both faces, are supported (on the ground or on service structures) in a position as vertical as possible, so as not to unbalance energy capturing of any of the faces of the panel with respect to the other face.

The above-referred photovoltaic panels are usually attached to a structure which is founded by driving of pylons.

### Summarized description of the invention

As will be explained below, the present invention relates, according to a first aspect, to a supporting structure for supporting photovoltaic panels, the supporting structure comprising a metal support, in the shape of a top-hat profile, the metal support comprising:
- a horizontal upper portion, for vertically supporting photovoltaic panels;
- two flat lower portions extending on both sides of the upper portion, and
- connecting portions which connect the upper portion with the lower portions.

Attaching holes are made to the lower portions for attaching the lower portions to the ground by means of attaching means, such as ground screws.

The upper portion and the connecting portions define an inner hole for locating a gathering cabling including positive and negative cables for gathering the electricity collected by each panel, such as cabling also referred to as "leap-frog cabling".

According to a second aspect, the object of the invention relates to a photovoltaic installation comprising the supporting structure as described above, as well as photovoltaic panels, such as bifacial photovoltaic panels, vertically supported on the supporting structure.

According to a preferred embodiment, the installation further comprises albedo optimizing elements attached to the metal support, for improving the capturing of albedo radiation.

The invention as described above provides the following advantages with respect to the solutions making part of the state of the art as explained above.
- Reducing the amount of connection work to be performed on field, since the mechanical and electrical connections are preconfigured.
- Reducing the amount of foundation metallic material, such as steel, which is needed to support the panels.
- Raising the efficiency in energy gathering, mainly in bifacial panels, by optimizing the capturing of albedo radiation, which additionally leads, in bifacial panels, to an even balance of energy gathering of both sides.

### Brief description of the drawings

The advantages mentioned above, as well as other advantages and features of the present invention, shall be better understood with reference to the following detailed description of a preferred embodiment of the invention, with due regard to the attached set of figures, which are to be construed in an illustrative, non-limitative manner, and wherein:
- Figure 1 shows a front view of a supporting structure of the invention with a photovoltaic panel attached thereto in vertical position, according to a first preferred embodiment showing an inclined / tilted albedo optimizing element.
- Figure 2 shows a front view of a supporting structure of the invention with a photovoltaic panel attached thereto in vertical position, according to a second preferred embodiment showing a horizontal albedo optimizing element.
- Figure 3 shows a plan view of the structures according to figures 1-2.
- Figure 4 shows a detailed front view of the structure of the invention.
- Figure 5 shows a side view of the structure of the invention.
- Figure 6 shows a rear view of a panel, with a detailed image of the junction box.

### Detailed description of a preferred embodiment of the invention

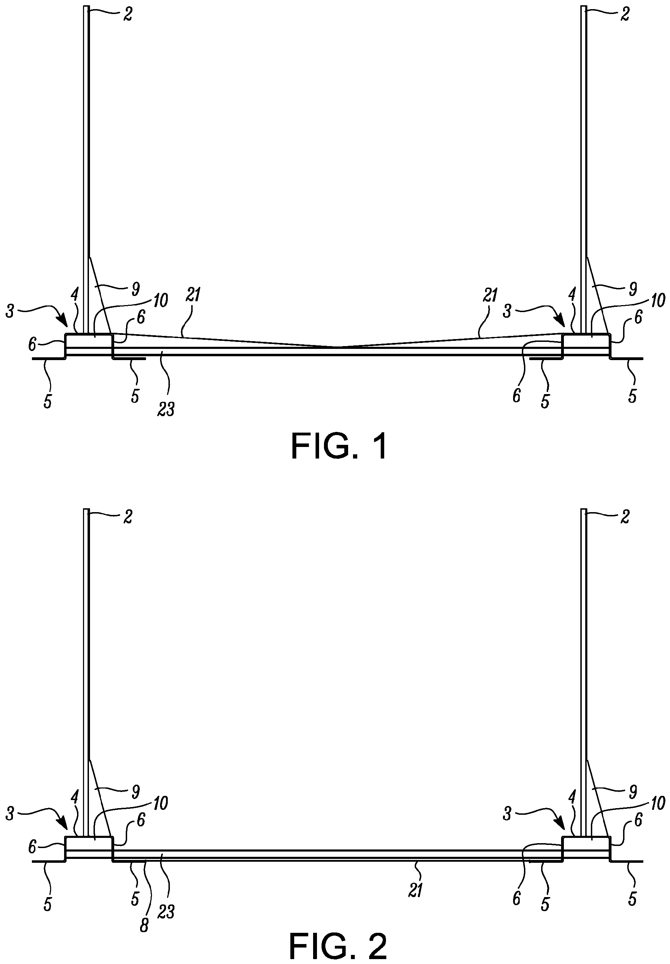

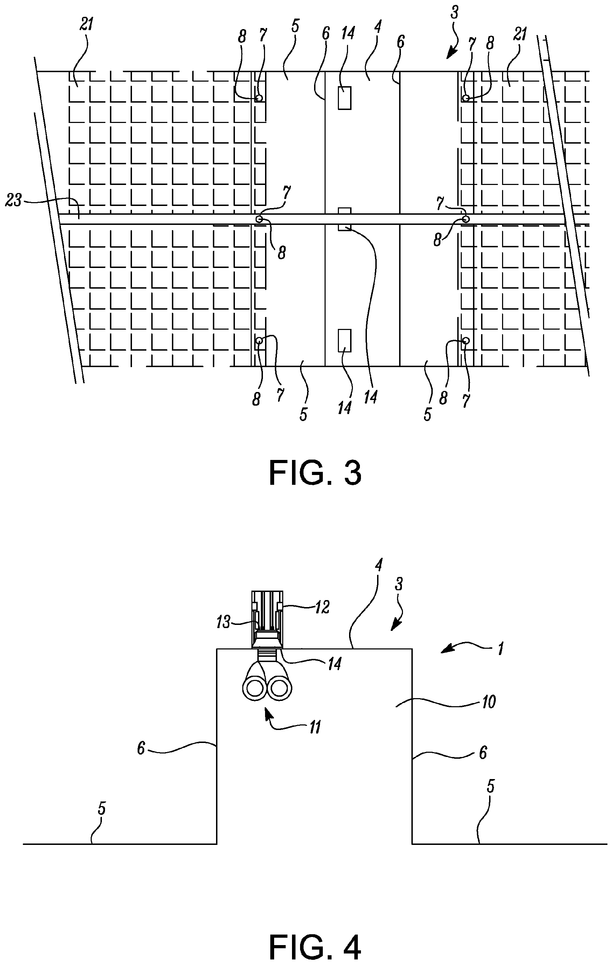

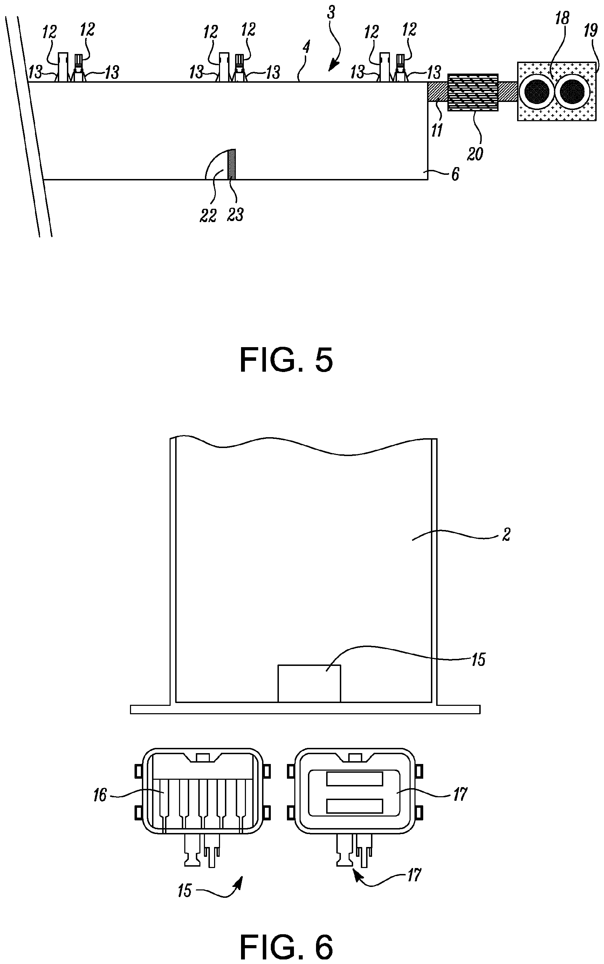

Next a detailed description of a preferred embodiment of a photovoltaic installation for bifacial photovoltaic panels of the invention shall be provided, with the help of figures 1-6 mentioned above.

The installation comprises a plurality of supporting structures supporting, in vertical position, bifacial photovoltaic panels (2). The installation may comprise lines of opposed supporting structures.

Any one of the supporting structures comprises a metal support (3) configured as a top-hat profile, also known as "omega profile", comprising a flat upper portion (4), two flat lower portions (5) extending on both sides of the upper portion (4), and connecting portions (6) which connect the upper portion (4) with the lower portions (5). The connecting portions (6) are generally perpendicular to the upper portion (4), although they may have a certain inclination with respect to the normal to the upper portion (4).

Each of the lower portions (5) includes attaching holes (7) for attaching the lower portions (5) to the ground by means of attaching means (8), such as ground screws. The upper portion (4) is in operation in horizontal orientation, supporting one or several photovoltaic panels (2), preferably bifacial photovoltaic panels (2), attached to the upper portion (4), in a vertical position, for instance by means of gussets (9). The upper portion (4) and the connecting portions (6) define an inner hole (10) within which gathering cabling (11) of the installation is located, including positive and negative cables for gathering the electricity collected by each panel (2), such as leap-frog cables.

The installation also comprises panel photovoltaic connectors (12), such as MC4 connectors, which connect corresponding panels (2). The panel photovoltaic connectors (12) are supported by spikes (13) mounted on spike holes (14) made in the upper portion (4) of the metal support (3).

As it is common, the panels (2) are provided with a junction box (15) containing protection means (16), such as protection diodes, and wherein connection cables (17) for connecting the panels (2) by means of the above referred panel photovoltaic connectors (12) may emerge directly from the junction box (15). Preferably the junction box (15) in centered at a lower part of the panel (2), so as to make easier an access to the connection cables (17).

The electricity collected by the gathering cabling (11), such as the leap-frog cabling, may be exported to a DC bus (18) with an insultation piercing connector (19), wherein an in-line fuse (20) may be inserted for protecting the gathering cabling (11).

Albedo optimizing elements (21), such as cloths, textiles or membranes, may be attached to the metal support (3) for optimizing capturing of albedo radiation. According to a first preferred embodiment, the albedo optimizing elements (21) may be mounted horizontally, preferably being attached to the lower portions (5) of the metal support (3), for example, by using the above referred attaching means (8), such as the referred ground screws. According to a second preferred embodiment, the albedo optimizing elements (21) may be mounted with a certain inclination with respect to horizontal, preferably being attached to the upper portion (5) and to the ground. As shown in the figures, the photovoltaic installation may comprise lines made of opposing supporting structures according to the invention, with albedo optimizing elements (21) between each two opposing structures.

The connecting portions (6) may comprise opposing perforations (22) to allocate a reinforcing bar (23), preferably lying on the lower portions (5), for traversing through one metal support (3) or several metal supports (3) of one same line. The reinforcing bar (23) may be attached to the ground, preferably by using the above referred attaching means (8), such as the ground screws.

List of references: 2 Panels; 3 Metal support; 4 Upper portion; 5 Lower portions; 6 Connecting portions; 7 Attaching holes; 8 Attaching means; 9 Gussets; 10 Inner hole; 11 Gathering cabling; 12 Panel photovoltaic connectors; 13 Spikes; 14 Spike holes; 15 junction box; 16 protecting means; 17 connection cables; 18 DC bus; 19 insultation piercing connector; 20 in-line fuse; 21 Albedo optimizing elements; 22 Opposing perforation; 23 Reinforcing bar.

## Claims

1. Supporting structure for supporting photovoltaic panels (2), **characterized by** comprising a metal support (3), in the shape of a top-hat profile, the metal support (3) comprising:
- a horizontal upper portion (4), for vertically supporting photovoltaic panels (2);
- two flat lower portions (5) extending on both sides of the upper portion (4), and
- connecting portions (6) which connect the upper portion (4) with the lower portions (5),
wherein the lower portions (5) include attaching holes (7) for attaching the lower portions (5) to the ground by means of attaching means (8);
wherein the upper portion (4) and the connecting portions (6) define an inner hole (10) for locating gathering cabling (11) including positive and negative cables for gathering the electricity collected by each panel (2).

2. Supporting structure according to claim 1, further comprising:
- opposing perforations (22) made in the connecting portions (6), and
- a reinforcing bar (24) traversing the metal support (3) through the perforations (22).

3. Supporting structure according to claim 2, wherein the reinforcing bar (23) lies on the lower portions (5).

4. Supporting structure according to anyone of claims 2-3, wherein the reinforcing bar (23) is attached to the ground.

5. Supporting structure according to claim 4, wherein the reinforcing bar (23) is attached to the ground by means of the attaching means (8).

6. Supporting structure according to anyone of claims 1-3, further comprising gussets for attaching the panel (2) to the upper portion (4).

7. Photovoltaic installation comprising:
- the supporting structure as described on anyone of claims 1-6; and
- a photovoltaic panel (2) vertically supported on the supporting structure.

8. Photovoltaic installation according to claim 7, further comprising, located within the inner hole (10), gathering cabling (11) including positive and negative cables for gathering the electricity collected by each panel (2).

9. Photovoltaic installation according to anyone of claims 7-8, wherein the panels (2) further comprise a junction box (15), centered at a lower part of the panel (2), and containing protection means (16),
wherein connection cables (17) for connecting the panels (2) emerge directly from the junction box (15).

10. Photovoltaic installation according to anyone of claims 7-9, further comprising:
- spike holes (14) made in the upper portion (4) of the metal support (3);
- spikes (13) mounted on the spike holes (14); and
- panel photovoltaic connectors (12), which connect corresponding panels (2), and which are supported by the spikes (13).

11. Photovoltaic installation according to anyone of claims 7-10, further comprising albedo optimizing elements (21), attached to the metal support (3) for improving capturing of albedo radiation.

12. Photovoltaic installation according to claim 11, wherein the albedo optimizing elements (21) are mounted horizontally, being attached to the lower portions (5) of the metal support (3).

13. Photovoltaic installation according to claim 12 wherein the albedo optimizing elements (21) are mounted by means of the attaching means (8).

14. Photovoltaic installation according to claim 11, wherein the albedo optimizing elements (21) are mounted with a certain inclination with respect to horizontal, being attached to the upper portion (5) and to the ground.

15. Photovoltaic installation according to anyone of claims 11-14, wherein the installation comprises lines made of opposing supporting structures, with albedo optimizing means (21) between each two opposing structures.
